# EUROPÄISCHE PATENTSCHRIFT

(11) **EP 3 247 980 B1**
(45) Veröffentlichungstag und Bekanntmachung des Hinweises auf die Patenterteilung: **24.10.2018**
(21) Anmeldenummer: 16700716.0
(22) Anmeldetag: 14.01.2016
(51) Int. Cl.: G01F 11/26

(54) **VORRICHTUNG ZUM DOSIEREN**
DEVICE FOR METERING
DISPOSITIF DE DOSAGE

(30) Priorität: 22.01.2015 DE 102015201007
(43) Veröffentlichungstag der Anmeldung: 29.11.2017
(73) Patentinhaber: Henkel AG & Co. KGaA, 40589 Düsseldorf (DE)
(72) Erfinder: GEBERZAHN, Rainer, 41363 Jüchen (DE); BUTTER-JENTSCH, Ralph, 40764 Langenfeld (DE); BERGBOHM, Ingmar, 57462 Olpe (DE); HENNING, Ingomar, 50933 Köln (DE)
(86) Internationale Anmeldenummer: PCT/EP2016/050681
(87) Internationale Veröffentlichungsnummer: WO 2016/116352

(56) Entgegenhaltungen:
- EP-A2- 0 447 634
- WO-A1-2013/123123

## Beschreibung

Die Erfindung betrifft einen Dosierer sowie eine zugehörige Vorrichtung für ein fließ- und/oder schüttfähiges Produkt, umfassend einen Behälter und einen Dosierer. Der Dosiererermöglicht eine Produktabgabe mit einer vordefinierten Menge.

### Stand der Technik

Die genaue und bedarfsgerechte Dosierung von fließ- und/oder schüttfähigen Produkten ist für eine Vielzahl von Anwendungsgebieten von Relevanz.

Insbesondere im Haushaltsbereich erfährt die Dosierung fließfähiger und schüttfähige Produkte eine steigende Bedeutung, was voranging in der exakten und bedarfsgesteuerten Dosierung der entsprechenden Wirkstoffe begründet ist, wodurch zum einen die Umwelt durch Ressourcenschonung und Vermeidung von Fehl- und Überdosierungen geschont, zum anderen die Effizienz der so dosierten Wirkstoffe optimiert wird.

EP1995181 beschreibt eine Vorrichtung für ein flüssiges Produkt, umfassend einen Behälter und einen Dosierer. Der Behälter mit Dosierer umfasst eine Einlasspassage, eine erste Kammer, eine zweite Kammer, und eine Auslasspassage. Die Einlasspassage, die erste Kammer, die zweite Kammer, und die Auslasspassage, sind in dieser Reihenfolge beim Dosieren stromabwärts strömungsverbunden. Beim Umkippen wird eine vorbestimmte Menge Produkt aus der Vorrichtung abgegeben.

WO200976959 beschreibt einen Dosierer der eine Einlasspassage, eine erste Kammer, eine zweite Kammer, und eine Auslasspassage umfasst. Die Einlasspassage, die erste Kammer, die zweite Kammer, und die Auslasspassage, sind in dieser Reihenfolge beim Dosieren stromabwärts strömungsverbunden.

WO2011137900 beschreibt einen Dosierer der eine Einlasspassage, eine erste Kammer, eine zweite Kammer, und eine Auslasspassage umfasst. Die Einlasspassage, die erste Kammer, die zweite Kammer, und die Auslasspassage, sind in dieser Reihenfolge beim Dosieren stromabwärts strömungsverbunden. Die zweite Kammer ist durch eine Zylinderwand und eine untere Kammerwand definiert. Die Position der unteren Kammerwand kann verwendet werden um die Dosiermenge zu bestimmen. Um die Position einzustellen wird die Länge der Zylinderwand eingestellt, entweder beim Herstellen oder danach, durch Materialabtragung. Die Ausführungsform gemäß Fig.8 aus WO2011137900 zeigt eine auf dem Zylinderrand aufgetragene untere Kammerwand.

EP447634 offenbart einen Dosierer gemäß dem Oberbegriff des Anspruchs 1. Der Stand der Technik beschreibt wie verschiedene Aspekte des Dosierers geändert werden können um die Dosiergenauigkeit zu verbessern. Dennoch ist es noch nicht gelungen in günstiger und effizienter Weise einen Dosierer bereitzustellen, in dem die Dosiermenge erst nach dem Herstellen der Kammer definiert wird. Die Lösung aus WO2011137900 fordert eine Änderung im Verfahrensschritt zur Herstellung des Zylinders oder ein Abtragen von Material nach diesem Verfahrensschritt. Beide Alternativen sind mit hohen Kosten und das Abtragen zusätzlich mit Materialverschwendung verbunden, was letztendlich zu einer teureren Vorrichtung führt.

### Aufgabe der Erfindung

Aufgabe der Erfindung ist es daher, einen verbesserten Dosierer bereitzustellen, der die Abgabe einer vordefinierten Menge an fließ- und/oder schüttfähigem Produktabgabe ermöglicht sowie ein zugehöriges Verfahren zur Einstellung der Abgabemenge. Eine weitere, verbundene Aufgabe ist es, eine geeignete Gesamtvorrichtung mit einem solchen Dosierer bereitzustellen.

Diese Aufgabe wird durch einen Dosierer mit den Merkmalen von Anspruch 1, sowie die Verfahrensansprüche 14 und 15 gelöst. Die abhängigen Ansprüche definieren bevorzugte Ausführungsformen.

Die Erfindung sieht eine Vorrichtung vor, für ein fließ- und/oder schüttfähiges Produkt, umfassend einen Behälter, einen Dosierer, wahlweise eine Kappe, wobei der Behälter mittels Dosierer einen Raum zur Aufbewahrung des Produkts bildet. Um eine vordefinierte Menge Produkt zu dosieren, umfassend der Dosierer eine Einlasspassage, eine erste Kammer, eine zweite Kammer und eine Auslasspassage, wobei die Einlasspassage, die erste Kammer, die zweite Kammer und die Auslasspassage, in dieser Reihenfolge beim Dosieren stromabwärts strömungsverbunden sind, und wobei die zweite Kammer einen Zylinder umfasst, dadurch gekennzeichnet, dass der Zylinder an einem Ende durch einen Zylindereinsatz geschlossen ist, durch dessen Position in dem Zylinder das Volumen der zweiten Kammer und damit die vordefinierte Menge eingestellt ist.

Es wird bevorzugt, dass der Zylindereinsatz mindestens teilweise einen U-förmigen Querschnitt aufweist. Der Querschnitt ist radial. Damit entsteht eine Kontaktfläche zwischen Zylinder und Zylindereinsatz, der Berührungsbereich, der für die Verbindung von Zylinder und Zylindereinsatz verwendet werden kann. Diese Verbindung kann, z.B., kraftschlüssig, formschlüssig, materialschlüssig oder eine Mischung daraus sein.

Es wird bevorzugt, dass der Zylindereinsatz formschlüssig in den Zylinder eingesetzt ist. Der Zylinder kann einen kreisförmigen, eckigen, 4-eckigen, elliptischen oder einen anderen geeigneten Querschnitt aufweisen.

Vorzugsweise ist der Zylindereinsatz mit dem Zylinder durch mindestens eine nichtlösbare Verbindung verbunden.

In einer Ausführung der Erfindung wird es bevorzugt, dass der Zylindereinsatz mit dem Zylinder durch Kraftschluss verbunden ist.

In einer besonders bevorzugten Ausführung ist die mindestens eine nichtlösbare Verbindung zwischen der Zylinderwandseite und dem Außenrand des Zylindereinsatzes (Zylindereinsatzwandseite) vorhanden.

Ersatzweise oder ergänzend kann der Zylindereinsatz 14 mit dem Zylinder 13 durch ein komplementäres Verschlusssystem mit Vorsprung und Vertiefung verbunden sein. Somit kann die genaue Positionierung des Zylindereinsatzes in dem Zylinder bei der Herstellung erfolgen. Gemäß einer Weiterentwicklung der Erfindung, sind zwei oder mehrere Vertiefungen und/oder mehrere Vorsprünge vorhanden. Damit ist es möglich, mit einem identischen Satz von Zylinder und Zylindereinsatz verschiedene, aber genau definierte, Volumina der zweiten Kammer einzustellen.

In allen Ausführungen der Erfindung wird es bevorzugt, dass der Zylindereinsatz mit dem Zylinder derart verbunden ist, dass im nicht-umgekippten Zustand und mit befüllter zweiter Kammer, das Produkt nicht durch die Verbindung aus der zweiten Kammer auslaufen kann.

Vorzugsweise ist der Zylindereinsatz aus einem Kunststoff gebildet, vorzugsweise aus einem Polyolefin-basierten Kunststoff. Weiter bevorzugt sind PE, ein PE Derivat, Polypropylen (PP), ein PP-Derivat oder Mischungen daraus. Der Kunststoff kann selbstverständlich weitere Komponenten in kleinere Menge beinhalten, die z.B. die Verarbeitung oder die Eigenschaften des Zylindereinsatzes verbessern, wie Gleitmittel, Nukleerungsmittel, Farbstoffe. In einer Ausführung umfasst der Kunststoff additive für Laserschweißen.

Vorzugsweise sind der Zylinder und der Zylindereinsatz aus demselben Werkstoff, weiter bevorzugt aus demselben Kunststoff gebildet. Damit wird insbesondere die Erzeugung einer materialschlüssigen Verbindung begünstigt, da ähnliche Werkstoffe z.B. besser verschmolzen und/oder verschweißt werden können. Der Werkstoff des Zylinders und der Werkstoff des Zylindereinsatzes können unterschiedliche weitere Komponenten in kleinere Menge beinhalten, die z.B. die Verarbeitung oder die Eigenschaften des Zylindereinsatzes verbessern. Vorzugsweise haben der Werkstoff des Zylinders und des Zylindereinsatzes eine identische Werkstoffzusammensetzung.

Vorzugsweise weist der Zylindereinsatz eine Wanddicke zwischen 400 Mikrometer und 2 mm auf.

Ergänzend oder alternativ wird bevorzugt, dass der Zylindereinsatz eine Wanddicke aufweist, die größer ist als die Zylinderwanddicke, dies wird besonders im Berührungsbereich bevorzugt. Damit erhöht sich die Herstellausbeute in mindestens einem der Herstellschritte: (i) Zylindereinsatz in den Zylinder einsetzen; (ii) Zylindereinsatz mit dem Zylinder kraftschlüssig verbinden oder verschweißen.

Es wird bevorzugt, dass der Außenrand des Zylindereinsatzes vom unteren Rand der Zylinderwand nach innen versetzt ist.

In einer bevorzugten Ausführung weist der Zylindereinsatz eine innere Kavität auf, die im eingebauten Zustand zum Volumen der zweiten Kammer beiträgt. Dadurch ergibt sich auch eine Versteifung des Kolbens. Durch diese Geometrie wird eine hohe Biegesteifigkeit des Kolbens erreicht, so dass dieser abdichtend eingesetzt werden kann. Dies ist besonders bevorzugt bei PP. Dadurch wird ein "Verkippen" oder sogar ein Reißen während des Fügevorgangs verhindert.

Es wird auch ein Verfahren zum Einstellen eines Volumens in einem erfindungsgemäßen Dosierer vorgesehen, nach dem der Zylindereinsatz in den Zylinder durch eine Kraft von mindestens 5 N, vorzugsweise mindestens 10 N eingeschoben wird, und vorzugsweise, in einem weiteren Verfahrensschritt mit der Zylinderwand nichtlösbar verbunden wird.

Das fließ- und/oder schüttfähige Produkt ist vorzugsweise ein fließfähiges Produkt. Weiterhin bevorzugt ist eine Flüssigkeit. Der Dosierer umfasst die Funktion eine vordefinierte Menge fließ- und/oder schüttfähiges Produkt zu dosieren. Der Dosierer umfasst eine Einlasspassage, eine erste Kammer, eine zweite Kammer und eine Auslasspassage. Die Einlasspassage, die erste Kammer, die zweite Kammer und die Auslasspassage sind in dieser Reihenfolge beim Dosieren stromabwärts strömungsverbunden, so dass beim Kippen des Behälters, die erste Kammer durch die Einlasspassage mit Produkt durch Schwerkraft füllbar ist und beim Zurückstellen des Behälters das Produkt durch Schwerkraft in die zweite Kammer übertragbar ist. Bei wiederholtem Kippen des Behälters, ist das Produkt durch die Auslasspassage aus dem Behälter hinaus fließbar/schüttbar, wobei Luft durch die Einlasspassage in den Behälter hineinfließt, um den inneren Druck mit dem äußeren Druck auszugleichen. Die Luft, die sich dann in der zweiten Kammer in dem gekippten Zustand akkumuliert, verhindert das Weiterfließen von Produkt aus dem inneren Raum des Behälters. Somit wird nur die Menge, die in der zweiten Kammer vorhanden war abgegeben. Diese Grundfunktion des Dosierers wird auch in dem oben genannten Stand der Technik detailliert erläutert.

Der Dosierer und die Vorrichtung eignen sich insbesondere für Tensidhaltige Produkte.

Die Erfindung wird an den nachfolgenden, Ausführungsbeispiele zeigenden Abbildungen näher erläutert. Es zeigen
Fig.1: eine erfindungsgemäße Vorrichtung mit Behälter und Dosierer.;
Fig. 2A bis Fig. 2C: eine Schnittansicht des Teils eines Behälters im nicht-umgekippten Zustand und mit befüllter zweiter Kammer beim Umkippen und beim Zurückkippen;
Fig. 3: eine Schnittansicht eines Zylindereinsatzes in einem Zylinder;
Fig. 4 und Fig. 4A: eine Schnittansicht und eine Ansicht von unten von einer weiteren Ausführung eines Zylindereinsatzes in einem Zylinder;
Fig. 5 und Fig. 5A: eine Schnittansicht und eine Ansicht von unten von einer weiteren Ausführung eines Zylindereinsatzes in einem Zylinder.

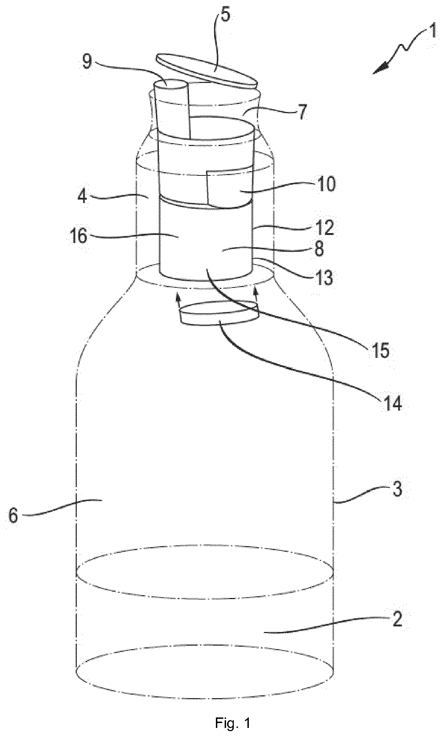

Figur 1 zeigt eine Vorrichtung 1 mit einem Behälter 3. Der Behälter 3 ist teilweise mit dem Produkt 2 befüllt. Zu sehen ist auch der Dosierer 4, der in dem Oberteil des Behälters eingesetzt ist. Der Dosierer 4 umfasst einen Einlass 10, eine erste Kammer 7 und eine zweite Kammer 8 mit einem Volumen 16. Die zweite Kammer 8 ist definiert durch einen Zylinder 13 der am Ende 15 (untere Seite) durch einen Zylindereinsatz 14 geschlossen ist. Die Auslasspassage 9 ist mit der zweiten Kammer 8 verbunden, und kann durch die an den Behälter 3 gekoppelte Kappe 5 geschlossen werden.

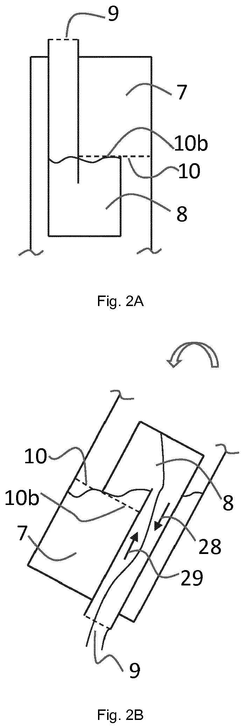

Figuren 2A bis 2C zeigen in vereinfachter Weise das Funktionsprinzip der Abgabe einer vordefinierten Menge von Produkt 2 aus der Vorrichtung 1. Fig. 2A zeigt einen Teil der Vorrichtung 1 im ungekippten Zustand und mit gefüllter zweiter Kammer 8. Beim Kippen in Pfeilrichtung, wie in Fig. 2B, fließt (Pfeil 28) das Produkt 2 aus der zweiten Kammer 8 durch den Auslass 9 aus der Vorrichtung. Der Druck wird beispielsweise durch Einfluss von Luft durch den Auslass 9 in Richtung 29 der zweiten Kammer 8 ausgeglichen. Das weitere, im Behälter vorhandene Produkt 2 fließt in die erste Kammer 7. Die Gestaltung des Dosierers ist derart, dass beim gekippten Zustand, das Produkt 2 aus der ersten Kammer 7 nicht frei durch die zweite Kammer 8 und Auslasspassage 9 aus der Vorrichtung 1 hinausfließen kann. Damit wird nur maximal das Volumen 16 der zweiten Kammer 8 abgegeben.

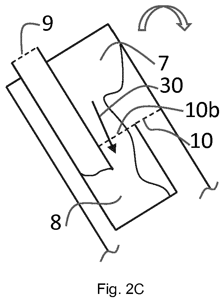

Beim Zurückkippen in Pfeilrichtung (Fig. 2C), fließt (Pfeil 30) das Produkt 2 aus der ersten Kammer 7, über die Einlasspassage 10b in die zweite Kammer 8, bis die zweite Kammer 8 mit dem Volumen 16 der zweiten Kammer 8 gefüllt ist, vorausgesetzt, dass noch genügend Produkt 2 in der Vorrichtung 1 vorhanden ist. Die zweite Kammer 8 bleibt im nicht-umgekippten Zustand, mit Produkt 2 befüllt. Somit ist die Vorrichtung 1 bereit zur erneuten Abgabe von Produkt 2 mit vordefinierter Menge.

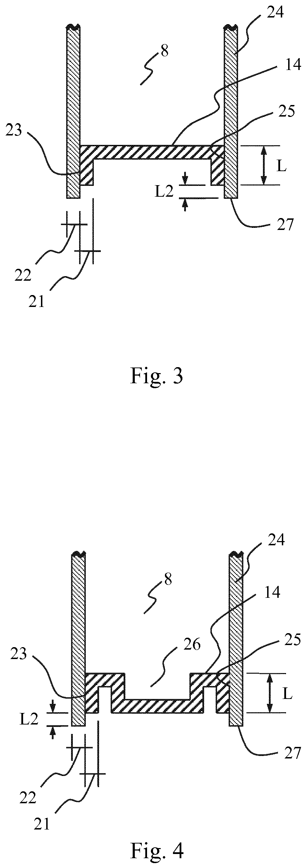

Figur 3 zeigt einen Teil der zweiten Kammer 8. Die Schnittansicht zeigt einen Zylindereinsatz 14 in einem Zylinder 13 mit einer Zylinderwand 24. Der Zylindereinsatz 14 hat einen U-förmigen Querschnitt und umfasst einen Außenrand 23 mit einer Höhe L, dessen Oberfläche die Oberfläche der Zylinderwandseite 25 berührt. Die Zylinderwand 24 hat eine Dicke 22 und der Außenrand 23 des Zylindereinsatzes 14 hat eine Wanddicke 21. Der Außenrand 23 des Zylindereinsatzes 14 ist vom unteren Rand der Zylinderwand 27 mit einem Abstand L2 nach innen versetzt.

Vorzugsweise ist der Zylindereinsatz 14 mit dem Zylinder 13 durch mindestens eine nichtlösbare Verbindung verbunden. In einer Ausführung der Erfindung wird es bevorzugt, dass der Zylindereinsatz 14 mit dem Zylinder 13 durch Kraftschluss verbunden ist. In einer besonders bevorzugten Ausführung ist die mindestens eine nichtlösbare Verbindung zwischen der Zylinderwandseite 25 und dem Außenrand 23 des Zylindereinsatzes 14 vorhanden. Ersatzweise oder ergänzend kann der Zylindereinsatz 14 mit dem Zylinder 13 durch ein komplementäres Verschlusssystem mit Vorsprung und Vertiefung verbunden sein.

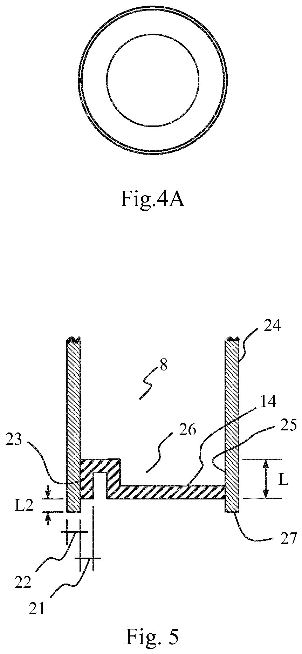

Figur 4 zeigt in einer weiteren Ausführung einen Teil der zweiten Kammer 8. Die Schnittansicht zeigt einen Zylindereinsatzes 14 in einem Zylinder 13 mit einer Zylinderwand 24. In dieser Ausführung unterscheidet sich der Zylindereinsatz 14 von der Ausführung aus Fig. 3 dadurch, dass der Zylindereinsatz 14 eine innere Kavität 26 aufweist, die im eingebauten Zustand, zum Volumen der zweiten Kammer 8 beiträgt. Der Zylindereinsatz 14 umfasst einen Außenrand 23 mit einer Höhe L, dessen Oberfläche die Oberfläche der Zylinderwandseite 25 berührt. Die Zylinderwand 24 hat eine Dicke 22 und der Außenrand 23 des Zylindereinsatzes 14 hat eine Wanddicke 21. Der Außenrand 23 des Zylindereinsatzes 14 ist vom unteren Rand der Zylinderwand 27 mit einem Abstand L2 nach innen versetzt. Fig. 4A zeigt den Zylindereinsatz 14, der mit der Zylinderwand 24 umschlossen ist, von unten. In dieser bevorzugten Variante hat der Zylinder 13 einen kreisförmigen (Achsensenkrechten) Querschnitt.

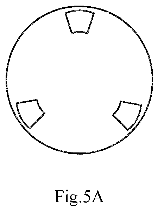

Figur 5 zeigt in einer weiteren Ausführung einen Teil der zweiten Kammer 8. Die Schnittansicht zeigt einen Zylindereinsatzes 14 in einem Zylinder 13 mit einer Zylinderwand 24. In dieser Ausführung umfasst der Zylindereinsatz 14 mindestens einen, bevorzugt mindestens 2, weiterbevorzugt mindestens 3 Außenrand-Segmente 23. Jedes Außenrandsegment 23 umfasst eine bestimmte Höhe und berührt die Oberfläche der Zylinderwandseite 25. Fig. 5A ist eine Sicht von unten. Hier werden beispielsweise 3 Außenrand-Segmente 23 dargestellt. Jedes AußenrandSegment 23 des Zylindereinsatzes 14 ist vom unteren Rand der Zylinderwand 27 mit einem Abstand L2 nach innen versetzt. In dieser bevorzugten Variante hat der Zylinder 13 einen kreisförmigen (Achsensenkrechter) Querschnitt.

### Bezugszeichen

- 1: Vorrichtung
- 2: Produkt
- 3: Behälter
- 4: Dosierer
- 5: Kappe
- 6: Raum
- 7: erste Kammer
- 8: zweite Kammer
- 9: Auslasspassage
- 10, 10b: Einlasspassage
- 13: Zylinder
- 14: Zylindereinsatz
- 15: Ende
- 16: Volumen der zweiten Kammer
- 21: Wanddicke des Zylindereinsatzes
- 22: Zylinderwanddicke
- 23: Außenrand(segment) des Zylindereinsatzes (14)
- 24: Zylinderwand
- 25: Zylinderwandseite
- 26: innere Kavität des Zylindereinsatzes
- 27: unteren Rand der Zylinderwand
- 28: Produktfließrichtung
- 29: Luftströmungsrichtung
- 30: Produktfließrichtung

## Patentansprüche

1. Dosierer (4) zum Dosieren einer vordefinierten Menge eines fließ- und/oder schüttfähigen Produktes (2) umfassend eine Einlasspassage (10), eine erste Kammer (7), eine zweite Kammer (8) und eine Auslasspassage (9), wobei die Einlasspassage (10), die erste Kammer (7), die zweite Kammer (8) und die Auslasspassage (9) in dieser Reihenfolge beim Dosieren stromabwärts strömungsverbunden sind, und wobei die zweite Kammer (8) einen Zylinder (13) umfasst, wobei der Zylinder (13) an einem Ende (15) durch einen Zylindereinsatz (14) geschlossen ist, **dadurch gekennzeichnet, dass** das Volumen der zweiten Kammer (16) und damit die vordefinierte Menge (11) durch die Position des Zylindereinsatzes (14) in dem Zylinder (13) eingestellt ist.

2. Dosierer (4) nach Anspruch 1, **dadurch gekennzeichnet, dass** der Zylindereinsatz (14) mindestens teilweise einen U-förmigen Querschnitt aufweist.

3. Dosierer (4) nach einem der vorangegangenen Ansprüche, **dadurch gekennzeichnet, dass** der Zylindereinsatz (14) formschlüssig in den Zylinder (13) eingesetzt ist.

4. Dosierer (4) nach einem der vorangegangenen Ansprüche, **dadurch gekennzeichnet, dass** der Zylindereinsatz (14) mit dem Zylinder (13) durch Kraftschluss verbunden ist.

5. Dosierer (4) nach einem der vorangegangenen Ansprüche, **dadurch gekennzeichnet, dass** der Zylinder (13) und der Zylindereinsatz (14) aus demselben Werkstoff gebildet sind.

6. Dosierer (4) nach einem der vorangegangenen Ansprüche, **dadurch gekennzeichnet, dass** der Zylindereinsatz (14) aus einem Kunststoff ist.

7. Dosierer (4) nach einem der vorangegangenen Ansprüche, **dadurch gekennzeichnet, dass** der Zylindereinsatz (14) eine Wanddicke (21) zwischen 400 Mikrometer und 2 mm aufweist.

8. Dosierer (4) nach einem der vorangegangenen Ansprüche, **dadurch gekennzeichnet, dass** der Zylindereinsatz (14) eine Wanddicke (21) aufweist die größer ist als die Zylinderwanddicke (22).

9. Dosierer (4) nach einem der vorangegangenen Ansprüche, **dadurch gekennzeichnet, dass** der Außenrand (23) des Zylindereinsatzes (14) vom unteren Rand (27) der Zylinderwand (24) nach innen versetzt ist.

10. Dosierer (4) nach einem der vorangegangenen Ansprüche, **dadurch gekennzeichnet, dass** der Zylindereinsatz eine innere Kavität (26) aufweist,die im eingebauten Zustand zum Volumen der zweiten Kammer (16) beiträgt.

11. Dosierer (4) nach einem der vorangegangenen Ansprüche, **dadurch gekennzeichnet, dass** der Zylindereinsatz (14) mit dem Zylinder (13) durch mindestens eine nichtlösbare Verbindung (20) verbunden ist.

12. Dosierer (4) nach Anspruch 11, **dadurch gekennzeichnet, dass** die nichtlösbare Verbindung (20) zwischen der Zylinderwandseite (25) und der Zylindereinsatzwandseite (23) vorhanden ist.

13. Vorrichtung (1) für ein fließ- und/oder schüttfähiges Produkt (2), umfassend einen Behälter (3), einen Dosierer (4) gemäß einem der vorangegangenen Ansprüche und wahlweise eine Kappe (5), wobei der Behälter (3) mittels des Dosierers (4) einen Raum (6) zur Aufbewahrung des Produkts (2) bildet.

14. Verfahren zum Einstellen eines Volumens in einem Dosierer (4) nach mindestens einem der Ansprüchen 1 bis 12 **dadurch gekennzeichnet, dass** der Zylindereinsatz (14) in den Zylinder (13) durch eine Kraft von mindestens 5 N eingeschoben wird und in einem weiteren Verfahrensschritt mit der Zylinderwand (24) nichtlösbar verbunden wird.

15. Verfahren zum Einstellen eines Volumens in einem Dosierer (4) nach Anspruch 14, **dadurch gekennzeichnet, dass** der Zylindereinsatz (14) in den Zylinder (13) durch eine geeignete Kraft eingeschoben wird und allein durch den Kraftschluss der Flächenpressung zwischen Zylindereinsatz (14)und Zylinderwand (24) auf Position gehalten wird.

## Claims

1. A dosing device (4) for dosing a predefined amount of a flowable and/or pourable product (2), comprising an inlet passage (10), a first chamber (7), a second chamber (8) and an outlet passage (9), the inlet passage (10), the first chamber (7), the second chamber (8) and the outlet passage (9) being fluidically connected so as to flow downstream in this order when dosing, and the second chamber (8) comprising a cylinder (13), the cylinder (13) being closed at one end (15) by a cylinder insert (14), **characterized in that** the volume of the second chamber (16) and thus the predefined amount (11) is adjusted by the position of the cylinder insert (14) in the cylinder (13).

2. The dosing device (4) according to claim 1, **characterized in that** the cylinder insert (14) has a U-shaped cross section at least in part.

3. The dosing device (4) according to one of the preceding claims, **characterized in that** the cylinder insert (14) is form-fittingly inserted into the cylinder (13).

4. The dosing device (4) according to one of the preceding claims, **characterized in that** the cylinder insert (14) is frictionally connected to the cylinder (13).

5. The dosing device (4) according to one of the preceding claims, **characterized in that** the cylinder (13) and the cylinder insert (14) are made of the same material.

6. The dosing device (4) according to one of the preceding claims, **characterized in that** the cylinder insert (14) is made of plastics material.

7. The dosing device (4) according to one of the preceding claims, **characterized in that** the cylinder insert (14) has a wall thickness (21) of between 400 micrometers and 2 mm.

8. The dosing device (4) according to one of the preceding claims, **characterized in that** the cylinder insert (14) has a wall thickness (21) that is greater than the cylinder wall thickness (22).

9. The dosing device (4) according to one of the preceding claims, **characterized in that** the outer edge (23) of the cylinder insert (14) is inwardly offset from the lower edge (27) of the cylinder wall (24).

10. The dosing device (4) according to one of the preceding claims, **characterized in that** the cylinder insert has an inner cavity (26) that contributes to the volume of the second chamber (16) in the installed state.

11. The dosing device (4) according to one of the preceding claims, **characterized in that** the cylinder insert (14) is connected to the cylinder (13) by means of at least one non-detachable connection (20).

12. The dosing device (4) according to claim 11, **characterized in that** the non-detachable connection (20) is between the cylinder wall face (25) and the cylinder insert wall face (23).

13. An apparatus (1) for a flowable and/or pourable product (2), comprising a container (3), a dosing device (4) according to one of the preceding claims and optionally a cap (5), wherein the container (3) forms a space (6) by means of the dosing device (4) in order to store the product (2).

14. A method for adjusting a volume in a dosing device (4) according to at least one of claims 1 to 12, **characterized in that** the cylinder insert (14) is pushed into the cylinder (13) by a force of at least 5 N and, in a further method step, is non-detachably connected to the cylinder wall (24).

15. The method for adjusting a volume in a dosing device (4) according to claim 14, **characterized in that** the cylinder insert (14) is pushed into the cylinder (13) by an appropriate force and is held in position solely by the frictional connection of the surface pressure between the cylinder insert (14) and the cylinder wall (24).

## Revendications

1. Doseur (4) destiné au dosage d'une quantité prédéfinie d'un produit (2) pouvant s'écouler et/ou être déversé, comprenant un passage d'admission (10), une première chambre (7), une deuxième chambre (8) et un passage d'évacuation (9), le passage d'admission (10), la première chambre (7), la deuxième chambre (8) et le passage d'évacuation (9) étant raccordés en écoulement vers l'aval dans cet ordre lors du dosage, et la deuxième chambre (8) comprenant un cylindre (13), le cylindre (13) étant fermé, à une extrémité (15), par un insert de cylindre (14), **caractérisé en ce que** le volume de la deuxième chambre (16) et donc la quantité (11) prédéfinie sont réglés par la position de l'insert de cylindre (14) dans le cylindre (13).

2. Doseur (4) selon la revendication 1, **caractérisé en ce que** l'insert de cylindre (14) a au moins partiellement une section transversale en forme de U.

3. Doseur (4) selon l'une des revendications précédentes, **caractérisé en ce que** l'insert de cylindre (14) est inséré dans le cylindre (13) par une liaison par complémentarité de formes.

4. Doseur (4) selon l'une des revendications précédentes, **caractérisé en ce que** l'insert de cylindre (14) est raccordé au cylindre (13) par liaison en force.

5. Doseur (4) selon l'une des revendications précédentes, **caractérisé en ce que** le cylindre (13) et l'insert de cylindre (14) sont formés de la même matière.

6. Doseur (4) selon l'une des revendications précédentes, **caractérisé en ce que** l'insert de cylindre (14) est en matière plastique.

7. Doseur (4) selon l'une des revendications précédentes, **caractérisé en ce que** l'insert de cylindre (14) a une épaisseur de paroi (21) comprise entre 400 micromètres et 2 mm.

8. Doseur (4) selon l'une des revendications précédentes, **caractérisé en ce que** l'insert de cylindre (14) a une épaisseur de paroi (21) qui est supérieure à l'épaisseur de paroi du cylindre (22).

9. Doseur (4) selon l'une des revendications précédentes, **caractérisé en ce que** le bord extérieur (23) de l'insert de cylindre (14) est décalé du bord inférieur (27) de la paroi de cylindre (24) vers l'intérieur.

10. Doseur (4) selon l'une des revendications précédentes, **caractérisé en ce que** l'insert de cylindre comporte une cavité intérieure (26) qui, dans l'état monté, contribue au volume de la deuxième chambre (16).

11. Doseur (4) selon l'une des revendications précédentes, **caractérisé en ce que** l'insert de cylindre (14) est raccordé au cylindre (13) par au moins une liaison non détachable (20).

12. Doseur (4) selon la revendication 11, **caractérisé en ce que** la liaison non détachable (20) est présente entre le côté paroi de cylindre (25) et le côté paroi d'insert de cylindre (23).

13. Dispositif (1) destiné à un produit (2) pouvant s'écouler et/ou être déversé, comprenant un réservoir (3), un doseur (4) selon l'une des revendications précédentes et au choix un capuchon (5), le réservoir (3) formant, au moyen du doseur (4), un espace (6) destiné au stockage du produit (2).

14. Procédé de réglage d'un volume dans un doseur (4) selon au moins l'une des revendications 1 à 12, **caractérisé en ce que** l'insert de cylindre (14) est introduit dans le cylindre (13) par une force d'au moins 5 N et, dans une étape de procédé supplémentaire, est relié de façon non détachable à la paroi de cylindre (24).

15. Procédé de réglage d'un volume dans un doseur (4) selon la revendication 14, **caractérisé en ce que** l'insert de cylindre (14) est introduit dans le cylindre (13) par une force appropriée et est maintenu en position uniquement par la liaison en force exercée par la pression superficielle entre l'insert de cylindre (14) et la paroi de cylindre (24).
